(19) Europäisches Patentamt
European Patent Office
Office européen des brevets

(11) **EP 3 796 150 B1**

(12) **EUROPEAN PATENT SPECIFICATION**

(45) Date of publication and mention
of the grant of the patent:
**06.09.2023 Bulletin 2023/36**

(21) Application number: **18927438.4**

(22) Date of filing: **12.12.2018**

(51) International Patent Classification (IPC):
*G06F 3/06* (2006.01)

(52) Cooperative Patent Classification (CPC):
**G06F 3/0644; G06F 3/0607; G06F 3/0619;
G06F 3/0631; G06F 3/0671; G06F 3/0683**

(86) International application number:
**PCT/CN2018/120469**

(87) International publication number:
**WO 2020/019630 (30.01.2020 Gazette 2020/05)**

(54) **STORAGE VOLUME CREATION METHOD AND APPARATUS, SERVER, AND STORAGE MEDIUM**

SPEICHERVOLUMENERZEUGUNGSVERFAHREN UND -VORRICHTUNG, SERVER UND
SPEICHERMEDIUM

PROCÉDÉ ET APPAREIL DE CRÉATION DE VOLUME DE STOCKAGE, SERVEUR ET SUPPORT
DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.07.2018 CN 201810827675**

(43) Date of publication of application:
**24.03.2021 Bulletin 2021/12**

(73) Proprietor: **Transwarp Technology (Shanghai)
Co., Ltd.
Shanghai 200233 (CN)**

(72) Inventors:
• **SHEN, Tao**
**Shanghai 200233 (CN)**
• **ZHENG, Huaicheng**
**Shanghai 200233 (CN)**

(74) Representative: **HGF**
**HGF Limited
1 City Walk
Leeds LS11 9DX (GB)**

(56) References cited:
**CN-A- 101 997 918      CN-A- 103 634 379
CN-A- 107 797 766      CN-A- 109 032 521
US-A1- 2011 225 379      US-A1- 2017 109 045**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

Embodiments of the present application relate to data storage technologies, and for example, to a storage volume creation method and apparatus, a server and a storage medium.

BACKGROUND

Local storage refers to a storage manner of storing data on a storage device such as a local magnetic disk, a mobile hard disk, a USB flash disk and an optical disk. Compared with network storage, the local storage can provide more efficient input/output (IO) performance, and is simple to maintain and convenient to operate.

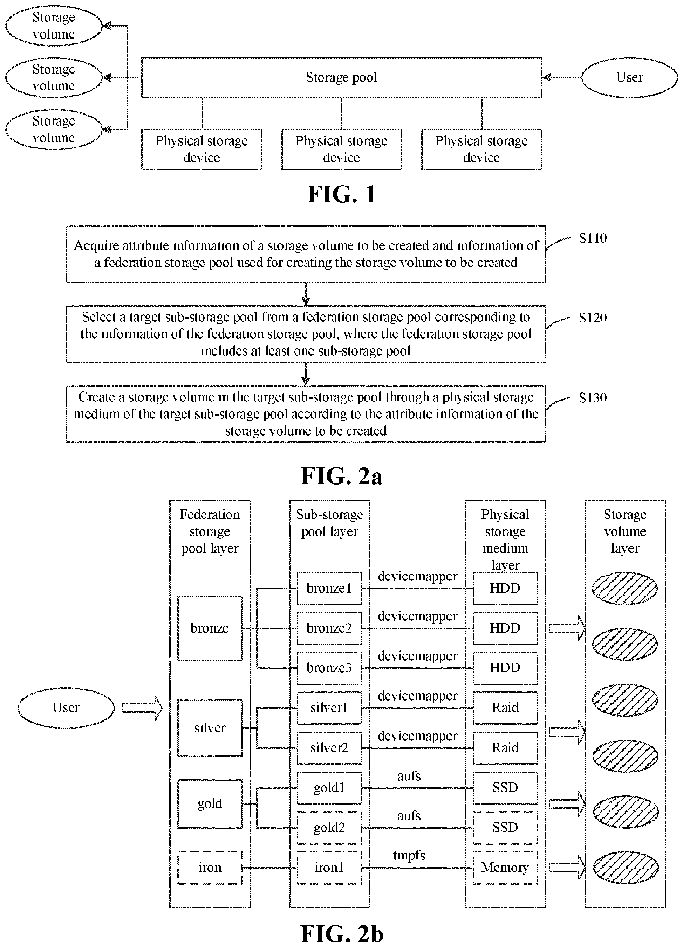

In an application scenario of the local storage, in order to improve the efficiency in using the storage, a storage pool is typically used for allocation of storage resources. As shown in FIG. 1, the storage pool is composed of at least one physical storage medium, and a storage volume is allocated, according to an operation of a user, from the storage pool, so that the user stores data. This storage architecture has a disadvantage that when the physical storage medium is damaged, the storage pool can hardly determine a damaged address and then will not allocate the storage volume normally, leading to a result that the entire storage pool become inaccessible once the physical storage medium is damaged.

Therefore, when the physical storage medium fails, the data storage method cannot operate normally and is poor in stability.

Further relevant technologies are also known from US 2017/109045 A1 which relates to multiple storage subpools of a virtual storage pool in a multiple processor environment, and US 2011/225379 A1 which relates to a volume management apparatus and storage system.

SUMMARY

Embodiments of the present application provide a storage volume creation method, a server and a storage medium, so that when a physical storage medium fails, normal operation can be achieved, and the stability is kept.

The invention is set out in the appended set of claims.

BRIEF DESCRIPTION OF DRAWINGS

FIG. 1 is structural diagram of a storage architecture in the related art;
FIG. 2A is a flowchart of a storage volume creation method provided by an embodiment one of the present application;
FIG. 2B is a schematic diagram of a Pool Federation storage architecture provided by the embodiment one of the present application;
FIG. 3 is a flowchart of a storage volume creation method provided by an embodiment two of the present application;
FIG. 4 is a flowchart of a storage volume creation method provided by an embodiment three of the present application;
FIG. 5 is a flowchart of a storage volume creation method provided by an embodiment four of the present application;
FIG. 6 is a structural diagram of a storage volume creation apparatus provided by an embodiment five of the present application; and
FIG. 7 is a structural diagram of a server provided by an embodiment six of the present application.

DETAILED DESCRIPTION

The present application will be further described below in conjunction with the accompanying drawings and embodiments in detail. It should be understood that the specific embodiments described herein are merely used for explaining the present application and are not intended to limit the present application. It should also be noted that, for ease of description, only some, but not all, of the structures related to the present application are shown in the drawings.

Embodiment one

FIG. 2A is a flowchart of a storage volume creation method provided by an embodiment one of the present application. This embodiment is applicable to a local storage scenario in which a storage volume is created through a storage architecture, a large number of direct attached storage (DAS) mechanisms are used in the local storage, which are simple to maintain, quick to operate, and high in the IO efficiency. The storage architecture in this embodiment is a kind of DAS storage architecture. The method is performed by a storage volume creation apparatus, the storage volume creation apparatus is composed of at least one of hardware and software, and integrated in a server. As shown in FIG. 2A, the method specifically includes steps S110, S120, and S130.

In step S110, attribute information of a storage volume to be created and information of a federation storage pool used for creating the storage volume to be created is acquired.

The storage volume to be created is provided to an application program for data storage. The attribute information of the storage volume to be created includes, but is not limited to, a space size applied for the storage volume to be created and a read-write bandwidth applied for the storage volume to be created. The read-write bandwidth includes a number of read-write operations per second (Input/Output Operations Per Second, iops), a number of transmitted bits per second (bps), or a bandwidth proportion of a physical storage medium occupied in each read-write scheduling period. The bandwidth proportion of the physical storage medium occupied in each read-write scheduling period is for example half of the bandwidth of the physical storage medium.

According to the embodiments of the present application, the storage volume is created through a pool federation storage architecture. FIG. 2B is a structural diagram of a pool federation storage architecture provided by an embodiment one of the present application. As shown in FIG. 2B, an uppermost layer of the pool federation storage architecture is a federation storage pool layer, the federation storage pool layer is visible to a user, for example, the federation storage pool layer is typically exposed to the user in a form of a service.

The federation storage pool layer includes at least one federation storage pool. As shown in FIG. 2B, "bronze" represents a storage service with low expense, low security and low speed, "silver" represents a storage service with security, throughput and high cost-effectiveness, "gold" represents a storage service with high speed, and "iron" represents a storage service with high speed and only used for temporary computation. The different performance of the federation storage pool depends on the followings: back-end storage and a file system type of sub-storage pools included in the federation storage pool, type, number, size and the like of the physical storage media included in the federation storage pool.

Information of the federation storage pool, such as an address of the federation storage pool, a name of the federation storage pool, a total space size of the federation storage pool and a type of a physical storage medium under the federation storage pool, points to or identifies one federation storage pool,. In an example, the name such as bronze, silver, gold and iron of the federation storage pool are adopted as the information of the federation storage pool.

The storage volume creation apparatus acquires the attribute information of the storage volume to be created and the information of the federation storage pool described above in various manners. In an implementation mode, the storage volume creation apparatus receives a storage volume configuration file, such as a yaml file or a j son file, sent by a client through a communication link. Next, the storage volume configuration file is parsed for the attribute information of the storage volume to be created and the information of the federation storage pool described above. In another implementation mode, the storage volume creation apparatus acquires the attribute information of the storage volume to be created, which is input by the user, and the information of the federation storage pool described above through a command line, a configuration interface or a browser. It should be noted that any method capable of accessing the server and providing the attribute information of the storage volume to be created and the information of the federation storage pool described above to the storage volume creation apparatus in the server is within the scope of the present application

In step S120, a target sub-storage pool is selected from a federation storage pool corresponding to the information of the federation storage pool, where the federation storage pool includes at least one sub-storage pool.

Each federation storage pool includes at least one sub-storage pool. In FIG. 2B, a second layer of the pool federation storage architecture is a sub-storage pool layer. The sub-storage pool layer includes at least one sub-storage pool, each sub-storage pool belonging to one federation storage pool. For example, the bronze includes 3 sub-storage pools, i.e., bronze1, bronze2 and bronze3, and each of the bronze1, the bronze2 and the bronze3 adopts a devicemapper as a storage back end; the silver includes 2 sub-storage pools, i.e., silver1 and silver2, and each of the silver1 and the silver2 adopts a devicemapper as a storage back end; the gold includes 2 sub-storage pools, i.e., gold 1 and gold 2, and each of the gold1 and the gold2 adopts an aufs as a storage back end; and the iron includes 1 sub-storage pool, i.e., iron1, and the iron1 adopts a tmpfs as a storage back end.

In the federation storage pool, a sub-storage pool may be randomly selected as a target storage pool; or a sub-storage pool satisfying a preset condition is selected as the target storage pool, and the preset condition may be a condition matching with the attribute information of the storage volume to be created or a condition customized by a developer.

In step S130, a storage volume is created in the target sub-storage pool through a physical storage medium of the target sub-storage pool according to the attribute information of the storage volume to be created.

As shown in FIG. 2B, a third layer of the pool federation storage architecture is a physical storage medium layer, and is also a physical entity layer of storage. The physical storage medium includes, but is not limited to, physical disks, solid state drives (SSDs), hard disk drives (HDDs), and the like. Physical disks may be used as a Raid to improve the IO performance and security of the storage. The SSD may be used as an IO intensive storage medium because of the outstanding IO throughput, or a memory may be used for storage service of temporary computation and may be quickly recycled after being used for a short time.

Each sub-storage pool has at least one physical storage medium added. In FIG. 2B, one physical storage medium is added to each sub-storage pool.

The physical storage medium in the target sub-storage pool is divided to create an area matching with the attribute information of the storage volume to be created for the data storage, so that the storage volume is created. In the pool federation storage architecture shown in FIG. 2B, a last layer is a storage volume layer, the storage volume layer includes at least one storage volume created.

An embodiment of the present application provides a new pool federation storage architecture. This storage architecture adds a federation storage pool layer on upper layers of multiple sub-storage pools, that is, the multiple sub-storage pools are connected to form a larger storage pool, so as to implement the scheduling among the sub-storage pools. On the basis of the pool federation storage architecture, in the embodiment of the present application, the attribute information of the storage volume to be created and the information of the federation storage pool used for creating the storage volume to be created are acquired; the target sub-storage pool is selected from the federation storage pool corresponding to the information of the federation storage pool; and the storage volume is created in the target sub-storage pool through the physical storage medium of the target sub-storage pool according to the attribute information of the storage volume to be created, so that after the physical storage medium is damaged, only the sub-storage pool to which the physical storage medium belongs is unavailable, but other sub-storage pools are still available, and then the whole storage architecture is available and is not affected by the damage of part of physical storage media, the storage architecture can operate safely with good stability and security, and thus storage resources are smoothly allocated to the application program, and the normal operation of the application program is guaranteed.

The method provided by this embodiment also achieves following technical effects: the information of the federation storage pool is acquired, the target sub-storage pool is selected from the federation storage pool, and then the storage volume is created, so that a scheme of creating the storage volume based on the information of the federation storage pool is realized, and for the user, the target sub-storage pool may be automatically selected and the storage volume may be created by only configuring the information of the federation storage pool and the attribute information without paying attention to storage details of a bottom layer, therefore the operation of the user is reduced, and the storage configuration is optimized.

In some embodiments, after the storage volume is created in the target sub-storage pool through the physical storage medium of the target sub-storage pool according to the attribute information of the storage volume to be created, an allocation process of the storage volume is further included. In an embodiment, a file system type and a mount point required for the storage volume to be created are acquired; the storage volume is formatted into a file system corresponding to the file system type; and the storage volume is mounted to the mount point.

The storage volume creation apparatus acquires the file system type and the mount point required for the storage volume to be created in various manners, the specific manner is the same as an acquisition manner of the attribute information of the storage volume to be created and the information of the federation storage pool described above, which is not to be detailed herein again. The file system type required for the storage volume to be created refers to a file system type that the created storage volume needs to be formatted into, such as a high-performance journal file system (xfs), a fourth-generation extended file system (ext4) and the like, and the mount point includes a directory in which the application program stores data or a container in which the application program is located. After the formatted storage volume is mounted to the mount point, the application program may directly use the storage volume for the data storage.

The method provided in this embodiment enables a local storage architecture to be applied to a top-speed dynamic allocation in a container environment, and reduces the workload of a large number of application engineers and cluster administrators.

Embodiment two

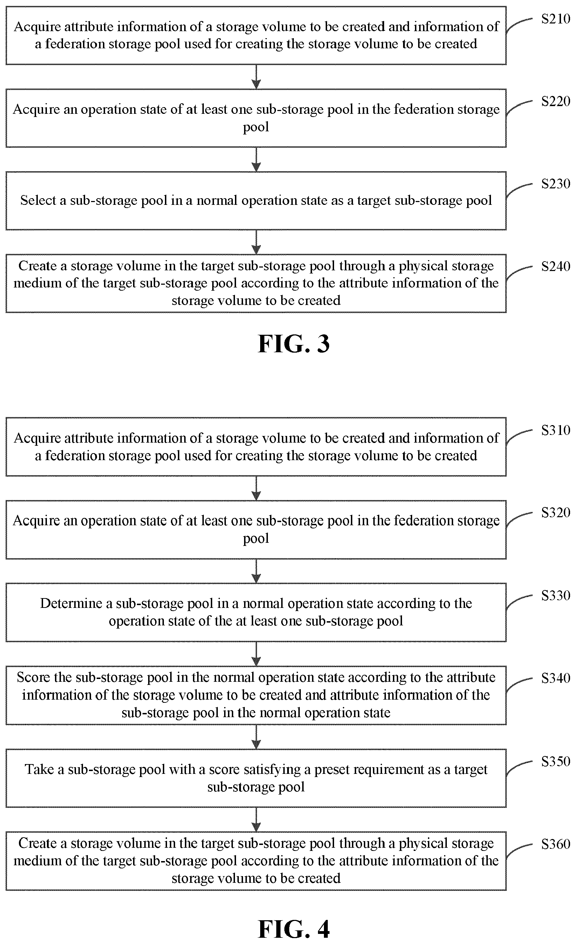

FIG. 3 is a flowchart of a storage volume creation method provided by an embodiment two of the present application. The method includes steps S210 to S240.

In step S210, attribute information of a storage volume to be created and information of a federation storage pool used for creating the storage volume to be created are acquired.

The step S210 is the same as the step S 110, which is not to be detailed herein again.

In step S220, an operation state of at least one sub-storage pool in the federation storage pool is acquired.

In this embodiment, a scanning result uploaded by a driver of a physical storage medium is received, a state of the physical storage medium is acquired according to the scanning result, and an operation state of a sub-storage pool to which the physical medium belongs is determined according to the state of the physical medium.

In step S230, a sub-storage pool in a normal operation state is selected as a target sub-storage pool.

A physical storage medium in the sub-storage pool in the normal operation state is in an available state.

If the physical storage medium in the sub-storage pool is in the available state and the sub-storage pool is in the normal operation state, a storage volume may be created, and a state mark of the sub-storage pool is set to be ready; if the physical storage medium in the sub-storage pool is in an operating state, the sub-storage pool is in an intermediate state, for example, another storage volume is being created or a storage volume is being deleted, the state mark of the sub-storage pool is set to be unready; if the physical storage medium in the sub-storage pool is in an offline or inactive stage, the sub-storage pool is in a standby state, the state mark of the sub-storage pool is set to be pending, and if the physical storage medium in the sub-storage pool is in a damaged state, an offline state, a drive letter error or the like, and this sub-storage pool is in an error or unavailable state; and the state mark of the sub-storage pool is set to be error.

In the embodiment, if the state mark of the sub-storage pool is set to be the error, research and development personnels are notified to repair the physical storage medium in the sub-storage pool. After the repair succeeds, the state mark of the sub-storage pool is reset to be ready.

In step S240, a storage volume is created in the target sub-storage pool through a physical storage medium of the target sub-storage pool according to the attribute information of the storage volume to be created.

In this embodiment, the operation state of the at least one sub-storage pool in the federation storage pool is acquired; the sub-storage pool in which the physical storage medium is in the available state is selected as the target sub-storage pool, and the storage volume is created in the target sub-storage pool through the physical storage medium in the target sub-storage pool, so that after the physical storage medium is damaged, other normally operating sub-storage pools may be selected to create the storage volume; and the stability and security of the storage system are effectively ensured, and thus storage resources are smoothly allocated to the application program, and the normal operation of the application program is guaranteed.

Embodiment three

FIG. 4 is a flowchart of a storage volume creation method provided by an embodiment three of the present application. The method includes steps S310 to S360.

In step S310, attribute information of a storage volume to be created and information of a federation storage pool used for creating the storage volume to be created are acquired.

In an embodiment, a storage volume creation apparatus receives a storage volume configuration file, such as a yaml file or a json file, sent by a client in a form of a hypertext transport protocol (http) through a communication link. Formats and parameters are shown below.

name: volume1

poolName: bronze/silver/gold/iron

size: 500Mi

io bandwidth (iops): 200

The name is a name of the storage volume to be created; the poolName is a name of the federation storage pool; the size is a space size applied for the storage volume to be created; the io bandwidth is a read-write bandwidth applied for the storage volume to be created, and the iops are used for explanation here.

Next, the storage volume creation apparatus parses the storage volume configuration file for the name of the storage volume to be created, the name of the federation storage pool, the space size applied for the storage volume to be created and the read-write bandwidth applied for the storage volume to be created.

In step S320, an operation state of at least one sub-storage pool in the federation storage pool is acquired.

The storage volume creation apparatus finds a corresponding federation storage pool according to the poolName and scans operation states of all sub-storage pools under the federation storage pool, and the method for acquiring the operation state of the sub-storage pool is detailed in the embodiment two, which is not to be detailed herein again.

In step S330, a sub-storage pool in a normal operation state is determined according to the operation state of the at least one sub-storage pool.

A physical storage medium in the sub-storage pool in the normal operation state is in an available state.

According to different operation states of scanned sub-storage pools, there are five situations as follows.

(1) If the operation state of the sub-storage pool is ready, then the process continues to step S340.

(2) If the operation state of the sub-storage pool is unready, then the storage volume creation apparatus puts the sub-storage pool into a waiting queue, waits for a preset time and acquires the operation state of the sub-storage pool again; if the operation state of the sub-storage pool is ready, then the operation is executed according to (1); if the operation state of the sub-storage pool is still unready, then the storage volume creation apparatus skips this sub-storage pool and scans a state of a next sub-storage pool, and returns warning information to prompt a user; if the operation state of the sub-storage pool is pending, then the operation is executed according to (3); and if the operation state of the sub-storage pool is error, then the operation is executed according to (4).

(3) If the operation state of the sub-storage pool is pending, the storage volume creation apparatus prints an error message containing configuration information of this sub-storage pool, skips this sub-storage pool, and scans a state of a next sub-storage pool.

(4) If the operation state of the sub-storage pool is error, the storage volume creation apparatus prints an error message containing error information of an underlying physical storage medium, skips this sub-storage pool, and scans a state of a next sub-storage pool.

(5) If no sub-storage pool is in an operation state of ready in the last, the storage volume creation apparatus directly returns an error and prints a number of the sub-storage pools in each state.

As can be seen from the above, the four states, i.e., read, unread, pending and error, cover all possible situations, and no matter in which state the sub-storage pool is, the storage volume creation apparatus has a coping strategy, so that a storage system will not be unavailable, and fault recovery and disaster recovery of the physical storage medium are facilitated.

In step S340, the sub-storage pool in the normal operation state is scored according to the attribute information of the storage volume to be created and attribute information of the sub-storage pool in the normal operation state.

The attribute information of the storage volume to be created includes at least one of a space size applied for the storage volume to be created and a read-write bandwidth applied for the storage volume to be created, the attribute information of the sub-storage pool includes at least one of a total space size, a total read-write bandwidth, a used space size and a used read-write bandwidth of the sub-storage pool.

In an implementation mode, a ratio of the space size applied for the storage volume to be created to the total space size is taken as a score of the sub-storage pool; or a ratio of the read-write bandwidth applied for the storage volume to be created to the total read-write bandwidth is taken as a score of the sub-storage pool; or a weighted summation is performed on the ratio of the space size applied for the storage volume to be created to the total space size and the ratio of the read-write bandwidth applied for the storage volume to be created to the total read-write bandwidth to obtain a score of the sub-storage pool.

In another implementation mode, the used space size is subtracted from the total space size of the sub-storage pool to obtain a remaining space size of this sub-storage pool, a ratio of the space size applied for the storage volume to be created to the remaining space size is taken as a score of the sub-storage pool; or the used read-write bandwidth is subtracted from the total read-write bandwidth of the sub-storage pool to obtain a remaining read-write bandwidth of the sub-storage pool, a ratio of the read-write bandwidth applied for the storage volume to be created to the remaining read-write bandwidth is taken as a score of the sub-storage pool.

In still another implementation mode, according to following formula, the used space size $used\_size_i$ is subtracted from the total space size $total\_size_i$ of the sub-storage pool in the normal operation state to obtain a remaining space size of the sub-storage pool in the normal operation state; the used read-write bandwidth $used\_io\_bandwidth_i$ is subtracted from the total read-write bandwidth $total\_io\_bandwidth_i$ of the sub-storage pool in the normal operation state to obtain a remaining read-write bandwidth of the sub-storage pool in the normal operation state; and a weighted summation is performed on a ratio of the space size request size applied for the storage volume to be created to the remaining space size and a ratio of the read-write bandwidth request_io_bandwidth applied for the storage volume to be created to the total read-write bandwidth to obtain a score of the sub-storage pool in the normal operation state.

$$score_i = \frac{request\_size}{total\_size_i - used\_size_i} * weight\_size + \frac{request\_io\_bandwidth}{total\_io\_bandwidth_i - used\_io\_bandwidth_i} * weight\_io\_bandwidth$$

Here, i is a serial number of the sub-storage pool, weight_size is a weight for a ratio of request size to the remaining space size, and weight_io_bandwidth is a weight for a ratio of request_io_bandwidth to the remaining read and write bandwidth.

In step S350, a sub-storage pool with a score satisfying a preset requirement is taken as a target sub-storage pool.

The preset requirement is related to a calculation method of the score. In general, the sub-storage pool satisfying the preset requirement is more matched with the attribute information of the storage volume to be created. For example, the total space size or the remaining space size of the sub-storage pool is larger than the space size applied for the storage volume to be created, the total read-write bandwidth or the remaining read-write bandwidth of the sub-storage pool is greater than the read-write bandwidth applied for the storage volume to be created.

In an embodiment, when the above formula is adopted to calculate the score of the sub-storage pool, any sub-storage pool with a score larger than a preset threshold value is taken as the target sub-storage pool, or a sub-storage pool with a highest score is taken as the target sub-storage pool.

In step S360, a storage volume is created in the target sub-storage pool through a physical storage medium of the target sub-storage pool according to the attribute information of the storage volume to be created.

The storage volume creation apparatus creates and allocates a storage volume according to the space size applied for the storage volume to be created and the read-write bandwidth by calling a function set of a corresponding storage back end, and formats the storage volume into a required file system. If the allocation succeeds, the storage volume is returned to the user for use, and then the allocated storage volume is added into the system cache, so that the sub-storage pool and the federation storage pool to which the storage volume belongs can be conveniently and efficiently queried. Meanwhile, the space size and the read-write bandwidth of the storage volume are added into $used\_size_i$ and $used\_io\_bandwidth_i$ of this sub-storage pool, so that the sub-storage pool is scored in a next process of creating the storage volume.

In this embodiment, the sub-storage pools in the normal operation state are scored according to the attribute information of the storage volume to be created and the attribute information of the sub-storage pools in the normal operation state; the sub-storage pool with the score satisfying the preset requirement is taken as the target sub-storage pool, so that after the physical storage medium is damaged, the sub-storage pool with the score satisfying the preset requirement in other sub-storage pools in the normal operation may be selected to create the storage volume, the stability and the security of the storage system are effectively ensured, and meanwhile, the use of storage resources in the whole federation pool storage architecture is also ensured to be not inclined. Thus, storage volumes are uniformly distributed in the federation pool storage architecture, the utilization rate of the storage resources is increased, the waste of the storage space and IO is avoided, the load of a single physical storage medium is prevented from being too large, the IO performance is improved, and finally the balance of data distribution is achieved.

Embodiment four

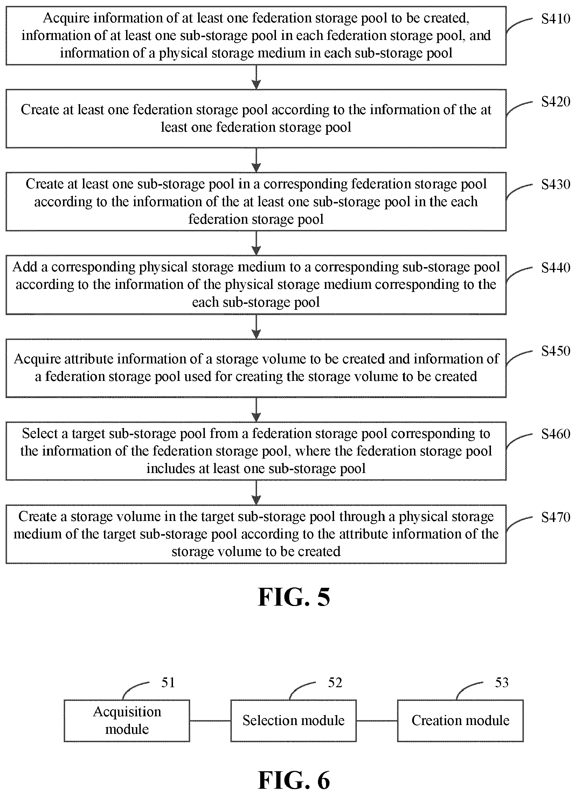

In this embodiment, before the attribute information of the storage volume to be created and the information of the federation storage pool used for creating the storage volume to be created are acquired, the method further includes a process of creating the federation storage pool layer, the sub-storage pool layer and the physical storage medium layer of the federation pool storage architecture. FIG. 5 is a flowchart of a storage volume creation method provided by an embodiment four of the present application. As shown in FIG. 5, the method includes steps S410 to S470.

In step S410, information of at least one federation storage pool to be created, information of at least one sub-storage pool in each federation storage pool, and information of a physical storage medium in each sub-storage pool are acquired.

The information of the federation storage pool includes a name of the federation storage pool and a name of the sub-storage pool in the federation storage pool. The information of the at least one sub-storage pool in the each federation storage pool includes: a name of the sub-storage pool, a combination of the physical storage medium in the sub-storage pool, a back-end storage, a file system type, and information of the physical storage medium in the sub-storage pool. The information of the physical storage medium in the each sub-storage pool includes a name, an address, a version and the like of the physical storage medium.

A storage volume creation apparatus acquires the information in step S410 in a variety of manners. In an implementation mode, the storage volume creation apparatus receives an http request sent by a client through a communication link, and parses the http request for a storage architecture configuration file, such as a yaml file or a json file. Next, the storage architecture configuration file is parsed for the information of the at least one federation storage pool to be created, the information of the at least one sub-storage pool in the each federation storage pool, and the information of the physical storage medium in the each sub-storage pool. In an embodiment, formats, parameters, and annotations in the storage architecture configuration file are shown below:

Federation Pool:

```
name: bronze //name of the federation storage pool
 sub Pools:
        -name: bronze1 //name of a first sub-storage pool
 driver: devicemapper //back-end storage of the sub-storage pool bronze1
         filesystem: xfs //file system type of the sub-storage pool bronze1
         type: stripe //combination of the
physical storage medium in the sub-storage pool bronze1
 devices: //information of the physical storage medium in the sub-storage pool bronze1
              -/dev/sda
              -/dev/sdb
        -name: bronze2 //name of a second sub-pool
 driver: aufs //back-end storage of the sub-storage pool bronze2
 filesystem: ext4 //file storage type of the sub-storage pool bronze2
 type: linear //combination of the physical storage medium in the sub-storage pool bronze2
 devices: //information of the physical storage medium in the sub-storage pool bronze2
              -/dev/sdc
              -/dev/sdd
```

In another implementation mode, the storage volume creation apparatus acquires above information input by a user through a command line, a configuration interface or a browser. It should be noted that any method capable of accessing a server and providing the information of the at least one federation storage pool, the information of the at least one sub-storage pool in the each federation storage pool and the information of the physical storage medium in the each sub-storage pool for the storage volume creation apparatus in the server is within the scope of protection of the embodiments of the present application.

In this embodiment, the at least one sub-storage pool may be heterogeneous, i.e., have different storage back ends, disk quantities, file system types, combination of physical storage medium, etc. A heterogeneous sub-storage pool is created by the different storage back ends, such as devicemapper, aufs, and tmpfs. The heterogeneous storage back end may provide different storage performances so as to meet different requirements of the user. Of course, it is not limited to this, at least one sub-storage may also be homogeneous, i.e., have identical storage backends, disks quantities, file system types, storage types, etc. It may be considered that each sub-storage pool exists independently, and the sub-storage pools do not interfere with each other.

In step S420, at least one federation storage pool is created according to the information of the at least one federation storage pool.

In step S430, at least one sub-storage pool is created in each federation storage pool according to the information of the at least one sub-storage pool in the corresponding federation storage pool.

In step S440, a physical storage medium corresponding to each sub-storage pool is added to the corresponding sub-storage pool according to the information of the physical storage medium.

In an embodiment, the storage volume creation apparatus parses content of the storage architecture configuration file and translates the content into an object array for a Golang program; the program calls, a parameter of each object, a corresponding storage back-end function, generates a name of a corresponding federation storage pool and a name of a sub-storage pool according to "name", calls different storage back-end function sets according to "driver", uses different physical storage media as underlying storages according to "devices", determines a combination of the underlying storages according to "type", and determines the file system type of the storage volume created by this sub-storage pool according to "filesystem".

In step S450, attribute information of a storage volume to be created and information of a federation storage pool used for creating the storage volume to be created are acquired.

In step S460, a target sub-storage pool is selected from a federation storage pool corresponding to the information of the federation storage pool including at least one sub-storage pool.

In step S470, a storage volume is created in the target sub-storage pool through a physical storage medium of the target sub-storage pool according to the attribute information of the storage volume to be created.

In this embodiment, the information of the at least one federation storage pool to be created, the information of the at least one sub-storage pool in the each federation storage pool, and the information of the physical storage medium in the each sub-storage pool are acquired, and the whole storage architecture is automatically created according to the acquired information, so that the process of creating the storage architecture is simplified, human resources are saved, and the creation efficiency is improved. Moreover, in a case of heterogeneous sub-storage pools and even different storage back ends, the federation storage pool layer can realize unified configuration and scheduling of the heterogeneous sub-storage pools with different storage back ends, thereby various storage requirements of the user are met.

In an embodiment, a file system built in a kernel of a local storage system is adopted to create the storage architecture, and create and allocate the storage volume in the embodiments of the present application. If the local system is Linux, the file system built in the kernel of Linux is adopted, so that the IO performance and the allocation performance of the storage volume are high, and particularly, after a large number of storage volumes are allocated, a higher allocation rate is still maintained.

In the above or following embodiments, after the physical storage medium is added to each sub-storage pool according to the information of the physical storage medium corresponding to the sub-storage pool, an expansion scheme of a storage capacity is further included, and the expansion scheme includes at least four expansion levels.

As for the expansion of the federation storage pool layer, a capacity expansion interface of a federation storage pool layer where at least one federation storage pool is located is called, and a new federation storage pool, for example iron in FIG. 2B, is added. In an embodiment, the expansion interface is an application program interface (API).

As for the extension of the sub-storage pool layer, a capacity expansion interface of a federation storage pool layer where at least one federation storage pool is located is called, and new sub-storage pools, for example gold2 and iron1 in FIG. 2B, in the federation storage pool are added; and/or, a capacity expansion interface of a sub-storage pool is called, and a space size of the sub-storage pool is increased, for example, the space size of gold1 is increased; and/or, the storage device is directly connected to the server through a small computer system interface (SCSI) or an optical fiber channel to increase the physical storage medium, and the increased physical storage medium is added to an original or newly added sub-storage pool to increase the space size of the corresponding sub-storage pool.

As for the expansion of the physical storage medium layer, the storage device is directly connected to the server through a SCSI interface or a fiber channel to increase the physical storage medium such as Memory and SSDs in FIG. 2B.

As for the expansion of a storage volume layer, a capacity expansion interface of a storage volume is called, and a space size of the storage volume is increased. After the storage volume is expanded, the attribute information of the sub-storage pool to which the storage volume belongs and the attribute information of the federation storage pool to which the storage volume belongs are updated according to the increased space size of the storage volume. The attribute information of the federation storage pool includes a total space size, a total read-write bandwidth, a used space size, the used read-write bandwidth and the like of the federation storage pool.

In this embodiment, the pool federation storage architecture is expended longitudinally realized by directly increasing the number of underlying storages. Through the above-mentioned expansion schemes regarding the federation storage pool layer, the sub-storage pool layer and the storage volume layer, a data structure is expanded horizontally, so that the storage capacity is increased horizontally, and it can be seen that the pool federation storage architecture has strong capability of horizontal and longitudinal expansion.

In an embodiment, after creating, according to the attribute information of the storage volume to be created, the storage volume in the target sub-storage pool through the physical storage medium of the target sub-storage pool, the method further includes: information of the storage volume is acquired from request information that use of the storage volume is finished; a sub-storage pool to which the storage volume belongs is determined according to the information of the storage volume; and the storage volume in the sub-storage pool to which the storage volume belongs is deleted.

After use of the storage volume is finished, the user sends the request information that the use of the storage volume is finished to the storage volume creation apparatus, and the request information includes information of the storage volume, such as a name of the storage volume, a sub-storage pool and a federation storage pool to which the storage volume belongs, a total space size, a total read-write bandwidth, a used space size, a used read-write bandwidth, a mount point and the like. The storage volume creation apparatus acquires the information of the storage volume from the request information, determines the sub-storage pool to which the storage volume belongs, and deletes the storage volume from the sub-storage pool. Since the storage volume is added to a system cache after successful allocation, the storage volume in the system cache needs to be deleted, and the used space size and the used read-write bandwidth of the sub-storage pool to which the storage volume belongs are updated.

In this embodiment, the information of the storage volume is acquired from the request information that use of the storage volume is finished; the sub-storage pool to which the storage volume belongs is determined according to the information of the storage volume; and the storage volume is deleted in the sub-storage pool, thereby realizing quick and timely recovery of the storage volume according to the request information. For example, in a container environment, an available storage space needs to be rapidly allocated to a container for use, meanwhile, the container may be rapidly recycled after being stopped, the technical scheme of this embodiment may be applied to the container environment, and the rapid allocation and recycling of the storage volume are achieved.

Embodiment five which is not part of claimed invention

FIG. 6 is a structural diagram of a storage volume creation apparatus provided by an embodiment five of the present application. The storage volume creation apparatus includes an acquisition module 51, a selection module 52 and a creation module 53.

The acquisition module 51 is configured to acquire attribute information of a storage volume to be created and information of a federation storage pool used for creating the storage volume to be created.

The selection module 52 is configured to select a target sub-storage pool from a federation storage pool corresponding to the information of the federation storage pool, where the federation storage pool includes at least one sub-storage pool.

The creation module 53 is configured to create, according to the attribute information of the storage volume to be created, a storage volume in the target sub-storage pool through a physical storage medium of the target sub-storage pool.

The embodiments of the present application provide a new pool federation storage architecture. The storage architecture adds a federation storage pool layer above multiple sub-storage pools, that is, the multiple sub-storage pools are connected to form a larger storage pool, so that the scheduling among the multiple sub-storage pools is realized. On the basis of the pool federation storage architecture, in the embodiments of the present application, the attribute information of the storage volume to be created and the information of the federation storage pool used for creating the storage volume to be created are acquired; the target sub-storage pool is selected from the federation storage pool corresponding to the information of the federation storage pool; and the storage volume is created in the target sub-storage pool through the physical storage medium of the target sub-storage pool according to the attribute information of the storage volume to be created, so that after the physical storage medium is damaged, only the sub-storage pool to which the physical storage medium belongs is unavailable, but other sub-storage pools are still available, and then the whole storage architecture is available and is not affected by damage of part of physical storage media, the operation may be performed safely, the good stability and security are achieved, and thus storage resources are smoothly allocated to the application program, and the normal operation of the application program is guaranteed. In an embodiment, the selection module 52 is configured to: acquire an operation state of the at least one sub-storage pool in the federation storage pool; select a sub-storage pool in a normal operation state as the target sub-storage pool; where a physical storage medium in the sub-storage pool in the normal operation state is in an available state.

In an embodiment, the selection module 52 is configured to: acquire an operation state of the at least one sub-storage pool in the federation storage pool; determine a sub-storage pool in a normal operation state according to the operation state of the at least one sub-storage pool; score, according to the attribute information of the storage volume to be created and attribute information of the sub-storage pool in the normal operation state, the sub-storage pool in the normal operation state; take a sub-storage pool with a score satisfying a preset requirement as the target sub-storage pool; where a physical storage medium in the sub-storage pool in the normal operation state is in an available state; the attribute information of the storage volume to be created includes at least one of a space size applied for the storage volume to be created, a number of read-write operations per second and a read-write bandwidth, the attribute information of the sub-storage pool includes at least one of a total space size, a total read-write bandwidth, a used space size and a used read-write bandwidth of the sub-storage pool, and the read-write bandwidth includes a number of read-write operations per second, iops, a number of transmitted bits per second (bps) or a bandwidth proportion of the physical storage medium occupied in each read-write scheduling period.

In an embodiment, upon scoring, according to the attribute information of the storage volume to be created and attribute information of the sub-storage pool, the sub-storage pool in the normal operation state, the selection module 52 is configured to: subtract the used space size from the total space size of the sub-storage pool in the normal operation state to obtain a remaining space size of the sub-storage pool in the normal operation state; subtract the used read-write bandwidth from the total read-write bandwidth of the sub-storage pool in the normal operation state to obtain a remaining read-write bandwidth of the sub-storage pool in the normal operation state; and perform a weighted summation on a ratio of the space size applied for the storage volume to be created to the remaining space size and a ratio of the read-write bandwidth applied for the storage volume to be created to the remaining read-write bandwidth to obtain a score of the sub-storage pool in the normal operation state.

In an embodiment, the acquisition module 51 is further configured to acquire information of at least one federation storage pool to be created, information of at least one sub-storage pool in each federation storage pool, and information of a physical storage medium in each sub-storage pool. The creation module 53 is configured to create at least one federation storage pool according to the information of the at least one federation storage pool; create, according to the information of the at least one sub-storage pool in the each federation storage pool, at least one sub-storage pool in a corresponding federation storage pool; and add, according to the information of the physical storage medium corresponding to the each sub-storage pool, a corresponding physical storage medium to a corresponding sub-storage pool.

In an embodiment, the information of the at least one sub-storage pool includes: a name of the sub-storage pool, a combination of the physical storage medium in the sub-storage pool, a back-end storage, a file system type, and information of the physical storage medium in the sub-storage pool.

In an embodiment, the storage volume creation apparatus further includes a capacity expansion module. After adding, according to the information of the physical storage medium corresponding to the each sub-storage pool, the corresponding physical storage medium to the corresponding sub-storage pool, the capacity expansion module is configured to perform at least one of following operations: call a capacity expansion interface of a federation storage pool layer where the at least one federation storage pool is located, and add a new federation storage pool; call the capacity expansion interface of the federation storage pool layer where the at least one federation storage pool is located, and add a new sub-storage pool in the federation storage pool; call a capacity expansion interface of the sub-storage pool, and increase a space size of the sub-storage pool; and call the capacity expansion interface of the storage volume, and increase a space size of the storage volume.

In an embodiment, the storage volume creation apparatus further includes an allocation module. The allocation module is configured to, after creating, according to the attribute information of the storage volume to be created, create a storage volume in the target sub-storage pool through a physical storage medium of the target sub-storage pool, acquire a file system type and a mount point required for the storage volume to be created; format the storage volume into a file system corresponding to the file system type; and mount the storage volume to the mount point.

In an embodiment, the storage volume creation apparatus further includes a deletion module. The deletion module is configured to, after creating, according to the attribute information of the storage volume to be created, create a storage volume in the target sub-storage pool through a physical storage medium of the target sub-storage pool, acquire information of the storage volume from request information that use of the storage volume is finished; determine, according to the information of the storage volume, a sub-storage pool to which the storage volume belongs; and delete the storage volume in the sub-storage pool.

The storage volume creation apparatus provided by the embodiments of the present application executes the storage volume creation method provided in any embodiment of the present application, and has corresponding functional modules and beneficial effects for executing this method.

Embodiment six

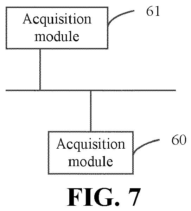

FIG. 7 is a structural diagram of a server provided by an embodiment six of the present application. As shown in FIG. 7, the server includes a processor 60 and a memory 61; the number of the processor 60 in the server may be one or more, and one processor 60 is taken as an example in FIG. 7; the processor 60 and the memory 61 in the server may be connected via a bus or in other manners. FIG. 7 illustrates an example in which the processor 60 and the memory 61 in the server are connected via a bus.

The memory 61, as a computer-readable storage medium, is used for storing software programs, computer-executable programs, and modules, such as program instructions/modules corresponding to the storage volume creation method in the embodiments of the present application (e.g., the acquisition module 51, the selection module 52, and the creation module 53 in the storage volume creation apparatus). The processor 60 executes various functional applications and data processing of the server by operating software programs, instructions and modules stored in the memory 61, thereby implementing the storage volume creation method described above.

The memory 61 may mainly include a program storage area and a data storage area. The program storage area may store an operating system, an application program required for at least one function. The data storage area may store data created according to the use of a terminal, etc. Moreover, the memory 61 may include a high-speed random access memory, and may further include a non-transitory memory, such as at least one magnetic disk storage device, a flash memory device, or other non-transitory solid-state storage device. In some embodiments, the memory 61 may further include memories remotely disposed with respect to the processor 60, and these remote memories may be connected to the server through a network. Examples of the above-described network include, but are not limited to, Internets, enterprise intranets, local area networks, mobile communication networks, and combinations thereof.

Embodiment seven

The embodiment seven of the present application further provides a computer-readable storage medium. The computer-readable storage medium stores a computer program thereon. The program, when executed by a computer processor, implements the storage volume creation method. The method includes described below.

Attribute information of a storage volume to be created and information of a federation storage pool used for creating the storage volume to be created is acquired;

A target sub-storage pool is selected from a federation storage pool corresponding to the information of the federation storage pool, where the federation storage pool includes at least one sub-storage pool.

A storage volume is created in the target sub-storage pool through a physical storage medium of the target sub-storage pool according to the attribute information of the storage volume to be created.

Of course, in the computer-readable storage medium storing the computer program thereon provided by the embodiment seven of the present application, the computer program is not limited to the method operations described above, but may also perform related operations in the storage volume creation method provided by any of the embodiments of the present application.

Those skilled in the art will clearly appreciate from the above description of implementation modes that the present application may be implemented by means of software and necessary general-purpose hardware, and of course may also be implemented by hardware, but in many cases the former is a better implementation mode. Based on this understanding, the technical scheme of the present application, either essentially or in terms of contributions to the related art, may be embodied in the form of a software product, and the computer software product may be stored in a computer readable storage medium, such as a floppy disk of a computer, a read-only memory (ROM), a random access memory (RAM), a flash memory (FLASH), a hard disk or an optional disk, including multiple instructions to a computer device (which may be a personal computer, a server, or a network device, etc.) to perform the method of the embodiments of the present application.

It should be noted that, in the above embodiments of the storage volume creation apparatus, the multiple units and modules included are only divided according to the functional logic, but are not limited to the division described above, as long as the corresponding functions may be implemented. In addition, specific names of multiple functional units are also merely for convenience of distinguishing from each other, and are not intended to limit the scope of protection defined by the appended claims.

**Claims**

1.  A storage volume creation method, comprising:

    acquiring (S110) attribute information of a storage volume to be created and information of a federation storage pool used for creating the storage volume to be created;
    selecting (S120) a target sub-storage pool from a federation storage pool corresponding to the information of the federation storage pool, wherein the federation storage pool comprises at least one sub-storage pool; and
    creating (S130), according to the attribute information of the storage volume to be created, a storage volume in the target sub-storage pool through a physical storage medium of the target sub-storage pool;

    wherein before acquiring (5110) the attribute information of the storage volume to be created and the information of the federation storage pool used for creating the storage volume to be created, the method further comprises:

    acquiring (S410) information of at least one federation storage pool to be created, information of at least one sub-storage pool in each federation storage pool, and information of a physical storage medium in each sub-storage pool;
    creating (S420) at least one federation storage pool according to the information of the at least one federation storage pool;
    creating (S430), according to the information of the at least one sub-storage pool in the each federation storage pool, at least one sub-storage pool in a corresponding federation storage pool;
    adding (S440), according to the information of the physical storage medium corresponding to the each sub-storage pool, a corresponding physical storage medium to a corresponding sub-storage pool;
    **characterized by**:
    selecting (S120) the target sub-storage pool from the federation storage pool corresponding to the information of the federation storage pool in the at least one federation storage pool comprises:

        acquiring (S320) an operation state of the at least one sub-storage pool in the federation storage pool; wherein the operation state comprises: a normal operation state being set to be ready and indicating that a physical storage medium in the sub-storage pool is in an available state, an intermediate state being set to be unready and indicating that another storage volume is being created or the storage volume is being deleted, a standby state being set to be pending and indicating that the physical storage medium in the sub-storage pool is in an offline or inactive stage, and an error or unavailable state being set to be error and indicating that the physical storage medium in the sub-storage pool is in a damaged state, an offline state or a drive letter error;
        determining (S330) a sub-storage pool in a normal operation state according to the operation state of the at least one sub-storage pool;
        scoring (S340) the sub-storage pool in the normal operation state according to the attribute information of the storage volume to be created and attribute information of the sub-storage pool in the normal operation state;

taking (S350) a sub-storage pool with a score satisfying a preset requirement as the target sub-storage pool.

2. The method of claim 1, wherein the attribute information of the storage volume to be created comprises at least one of a space size applied for the storage volume to be created and a read-write bandwidth applied for the storage volume to be created, the attribute information of the sub-storage pool comprises at least one of a total space size, a total read-write bandwidth, a used space size and a used read-write bandwidth of the sub-storage pool, and the read-write bandwidth comprises a number of read-write operations per second, iops, a number of transmitted bits per second, bps, or a bandwidth proportion of the physical storage medium occupied in each read-write scheduling period.

3. The method of claim 2, wherein scoring (S340) the sub-storage pool in the normal operation state according to the attribute information of the storage volume to be created and the attribute information of the sub-storage pool comprises:

subtracting the used space size from the total space size of the sub-storage pool in the normal operation state to obtain a remaining space size of the sub-storage pool in the normal operation state;
subtracting the used read-write bandwidth from the total read-write bandwidth of the sub-storage pool in the normal operation state to obtain a remaining read-write bandwidth of the sub-storage pool in the normal operation state; and
performing a weighted summation on a ratio of the application space size to the remaining space size and a ratio of the application read-write bandwidth to the remaining read-write bandwidth to obtain a score of the sub-storage pool in the normal operation state.

4. The method of claim 1, wherein the information of the at least one sub-storage pool comprises: a name of the sub-storage pool, a combination of the physical storage medium in the sub-storage pool, a back-end storage, a file system type, and information of the physical storage medium in the sub-storage pool.

5. The method of claim 1, after adding (S440), according to the information of the physical storage medium corresponding to the each sub-storage pool, the corresponding physical storage medium to the corresponding sub-storage pool, the method further comprises at least one of:

calling a capacity expansion interface of a federation storage pool layer where the at least one federation storage pool is located, and adding a new federation storage pool;
calling the capacity expansion interface of the federation storage pool layer where the at least one federation storage pool is located, and adding a new sub-storage pool in the federation storage pool;
calling a capacity expansion interface of the sub-storage pool, and increasing a space size of the sub-storage pool; and
calling the capacity expansion interface of the storage volume, and increasing a space size of the storage volume.

6. The method of claim 1, wherein after creating (S130), according to the attribute information of the storage volume to be created, the storage volume in the target sub-storage pool through the physical storage medium of the target sub-storage pool, the method further comprises:

acquiring a file system type and a mount point required for the storage volume to be created;
formatting the storage volume into a file system corresponding to the file system type; and
mounting the storage volume to the mounting point.

7. The method of any one of claims 1 to 6, wherein after creating (S130), according to the attribute information of the storage volume to be created, the storage volume in the target sub-storage pool through the physical storage medium of the target sub-storage pool, the method further comprises:

acquiring information of the storage volume from request information that use of the storage volume is finished;
determining, according to the information of the storage volume, a sub-storage pool to which the storage volume belongs; and
deleting the storage volume in the sub-storage pool to which the storage volume belongs.

8. A server, comprising:

at least one processor (60); and
a memory (61), configured to store at least one program,

wherein the at least one program, when executed by the at least one processor (60), cause the at least one processor (60) to implement the storage volume creation method of any one of claims 1 to 7.

9. A computer-readable storage medium, storing a computer program, wherein the program, when executed by a processor, implements the storage volume creation method of any one of claims 1 to 7.

**Patentansprüche**

1. Speichervolumen-Erzeugungsverfahren, umfassend:

Erfassen (S110) von Attributinformationen eines zu erzeugenden Speichervolumens und von Informationen eines Verbundspeicherpools, der zum Erzeugen des zu erzeugenden Speichervolumens verwendet wird;
Auswählen (S120) eines Ziel-Unterspeicherpools aus einem Verbundspeicherpool, der den Informationen des Verbundspeicherpools entspricht, wobei der Verbundspeicherpool mindestens einen Unterspeicherpool umfasst; und
Erzeugen (S130), gemäß den Attributinformationen des zu erzeugenden Speichervolumens, eines Speichervolumens in dem Ziel-Unterspeicherpool durch ein physisches Speichermedium des Ziel-Unterspeicherpools;
wobei vor dem Erfassen (S 110) der Attributinformationen des zu erzeugenden Speichervolumens und der Informationen des Verbundspeicherpools, der zum Erzeugen des zu erzeugenden Speichervolumens verwendet wird, das Verfahren ferner Folgendes umfasst:

Erfassen (S410) von Informationen mindestens eines zu erzeugenden Verbundspeicherpools, Informationen mindestens eines Unterspeicherpools in jedem Verbundspeicherpool und Informationen eines physischen Speichermediums in jedem Unterspeicherpool;
Erzeugen (S420) mindestens eines Verbundspeicherpools gemäß den Informationen des mindestens einen Verbundspeicherpools;
Erzeugen (S430), gemäß den Informationen des mindestens einen Unterspeicherpools in dem jeden Verbundspeicherpool, mindestens eines Unterspeicherpools in einem entsprechenden Verbundspeicherpool;
Addieren (S440), gemäß den Informationen des physischen Speichermediums, das dem jeden Unterspeicherpool entspricht, eines entsprechenden physischen Speichermediums zu einem entsprechenden Unterspeicherpool;
**gekennzeichnet durch**:
Auswählen (S120) des Ziel-Unterspeicherpools aus dem Verbundspeicherpool, der den Informationen des Verbundspeicherpools in dem mindestens einen Verbundspeicherpool entspricht, umfasst:

Erfassen (S320) eines Betriebszustands des mindestens einen Unterspeicherpools in dem Verbundspeicherpool; wobei der Betriebszustand Folgendes umfasst: einen Normalbetriebszustand, der darauf eingestellt ist, bereit zu sein, und angibt, dass sich ein physisches Speichermedium in dem Unterspeicherpool in einem verfügbaren Zustand befindet, einen Zwischenzustand, der darauf eingestellt ist, nicht bereit zu sein, und angibt, dass ein anderes Speichervolumen erzeugt wird oder das Speichervolumen gelöscht wird, einen Standby-Zustand, der darauf eingestellt ist, ausstehend zu sein, und angibt, dass sich das physische Speichermedium in dem Unterspeicherpool in einem Offline- oder inaktiven Stadium befindet, und einen Fehler- oder nicht verfügbaren Zustand, der darauf eingestellt ist, ein Fehler zu sein, und angibt, dass sich das physische Speichermedium in dem Unterspeicherpool in einem beschädigten Zustand, einem Offline-Zustand oder einem Laufwerksbuchstabenfehler befindet,
Bestimmen (S330) eines Unterspeicherpools in einem Normalbetriebszustand gemäß dem Betriebszustand des mindestens einen Unterspeicherpools;
Bewerten (S340) des Unterspeicherpools in dem Normalbetriebszustand gemäß den Attributinformationen des zu erzeugenden Speichervolumens und den Attributinformationen des Unterspeicherpools in dem Normalbetriebszustand;
Auffassen (S350) eines Unterspeicherpools mit einer Bewertung, die eine voreingestellte Anforderung erfüllt, als den Ziel-Unterspeicherpool.

**2.** Verfahren nach Anspruch 1, wobei die Attributinformationen des zu erzeugenden Speichervolumens mindestens eines von einer für das zu erzeugenden Speichervolumen angewendeten Speicherplatzgröße und einer für das zu erzeugende Speichervolumen angewendeten Lese-Schreibbandbreite umfassen, wobei die Attributinformationen des Unterspeicherpools mindestens eines von einer gesamten Speicherplatzgröße, einer gesamten Lese-Schreibbandbreite, einer verwendeten Speicherplatzgröße und einer verwendeten Lese-Schreibbandbreite des Unterspeicherpools umfassen und die Lese-Schreibbandbreite eine Anzahl von Lese-Schreibvorgängen pro Sekunde, iops, eine Anzahl von übertragenen Bits pro Sekunde, bps, oder einen Bandbreitenanteil des physischen Speichermediums, der in jeder Lese-Schreibplanungsperiode belegt ist, umfasst.

**3.** Verfahren nach Anspruch 2, wobei das Bewerten (S340) des Unterspeicherpools in dem Normalbetriebszustand gemäß den Attributinformationen des zu erzeugenden Speichervolumens und den Attributinformationen des Unterspeicherpools Folgendes umfasst:

Subtrahieren der verwendeten Speicherplatzgröße von der gesamten Speicherplatzgröße des Unterspeicherpools in dem Normalbetriebszustand, um eine verbleibende Speicherplatzgröße des Unterspeicherpools in dem Normalbetriebszustand zu erlangen;
Subtrahieren der verwendeten Lese-Schreibbandbreite von der gesamten Lese-Schreibbandbreite des Unterspeicherpools in dem Normalbetriebszustand, um eine verbleibende Lese-Schreibbandbreite des Unterspeicherpools in dem Normalbetriebszustand zu erlangen; und
Durchführen einer gewichteten Summierung eines Verhältnisses der Anwendungsspeicherplatzgröße zu der verbleibenden Speicherplatzgröße und eines Verhältnisses der Anwendungs-Lese-Schreibbandbreite zu der verbleibenden Lese-Schreibbandbreite, um eine Bewertung des Unterspeicherpools in dem Normalbetriebszustand zu erlangen.

**4.** Verfahren nach Anspruch 1, wobei die Informationen des mindestens einen Unterspeicherpools Folgendes umfassen: einen Namen des Unterspeicherpools, eine Kombination des physischen Speichermediums in dem Unterspeicherpool, einen Back-End-Speicher, einen Dateisystemtyp und Informationen des physischen Speichermediums in dem Unterspeicherpool.

**5.** Verfahren nach Anspruch 1, nach dem Addieren (S440), gemäß den Informationen des physischen Speichermediums, das dem jeden Unterspeicherpool entspricht, des entsprechenden physischen Speichermediums zu dem entsprechenden Unterspeicherpool, umfasst das Verfahren ferner mindestens eines von Folgendem:

Aufrufen einer Kapazitätserweiterungsschnittstelle einer Verbundspeicherpoolschicht, in der sich der mindestens eine Verbundspeicherpool befindet, und Addieren eines neuen Verbundspeicherpools,
Aufrufen der Kapazitätserweiterungsschnittstelle der Verbundspeicherpoolschicht, in der sich der mindestens eine Verbundspeicherpool befindet, und Addieren eines neuen Unterspeicherpools in dem Verbundspeicherpool;
Aufrufen einer Kapazitätserweiterungsschnittstelle des Unterspeicherpools und Erhöhen einer Speicherplatzgröße des Unterspeicherpools; und
Aufrufen der Kapazitätserweiterungsschnittstelle des Speichervolumens und Erhöhen einer Speicherplatzgröße des Speichervolumens.

**6.** Verfahren nach Anspruch 1, wobei nach dem Erzeugen (S130), gemäß den Attributinformationen des zu erzeugenden Speichervolumens, des Speichervolumens in dem Ziel-Unterspeicherpool durch das physische Speichermedium des Ziel-Unterspeicherpools, das Verfahren ferner Folgendes umfasst:

Erfassen eines Dateisystemtyps und eines Bereitstellungspunkts, die für das zu erzeugende Speichervolumen erforderlich sind;
Formatieren des Speichervolumens in ein Dateisystem, das dem Dateisystemtyp entspricht; und
Bereitstellen des Speichervolumens an dem Bereitstellungspunkt.

**7.** Verfahren nach einem der Ansprüche 1 bis 6, wobei nach dem Erzeugen (S130), gemäß den Attributinformationen des zu erzeugenden Speichervolumens, des Speichervolumens in dem Ziel-Unterspeicherpool durch das physische Speichermedium des Ziel-Unterspeicherpools, das Verfahren ferner Folgendes umfasst:

Erfassen von Informationen des Speichervolumens aus Anforderungsinformationen, dass die Verwendung des Speichervolumens beendet ist;

Bestimmen, gemäß den Informationen des Speichervolumens, eines Unterspeicherpools, zu dem das Speichervolumen gehört; und

Löschen des Speichervolumens in dem Unterspeicherpool, zu dem das Speichervolumen gehört.

8. Server, umfassend:

mindestens einen Prozessor (60); und

einen Speicher (61), der dazu konfiguriert ist, mindestens ein Programm zu speichern, wobei das mindestens eine Programm, wenn es durch den mindestens einen Prozessor (60) ausgeführt wird, den mindestens einen Prozessor (60) dazu veranlassen, das Speichervolumen-Erzeugungsverfahren nach einem der Ansprüche 1 bis 7 zu implementieren.

9. Computerlesbares Speichermedium, das ein Computerprogramm speichert, wobei das Programm, wenn es durch einen Prozessor ausgeführt wird, das Speichervolumen-Erzeugungsverfahren nach einem der Ansprüche 1 bis 7 implementiert.


**Revendications**

1. Procédé de création de volume de stockage, comprenant :

l'acquisition (S110) d'informations d'attribut d'un volume de stockage à créer et des informations d'un groupe de stockage de fédération utilisées pour créer le volume de stockage à créer ;

la sélection (S 120) d'un sous-groupe de stockage cible à partir d'un groupe de stockage de fédération correspondant aux informations du groupe de stockage de fédération, ledit groupe de stockage de fédération comprenant au moins un sous-groupe de stockage ; et

la création (S130), selon les informations d'attribut du volume de stockage à créer, d'un volume de stockage dans le sous-groupe de stockage cible par l'intermédiaire d'un support de stockage physique du sous-groupe de stockage cible ;

avant l'acquisition (S110) des informations d'attribut du volume de stockage à créer et des informations du groupe de stockage de fédération utilisées pour la création du volume de stockage à créer, ledit procédé comprenant en outre :

l'acquisition (S410) d'informations d'au moins un groupe de stockage de fédération à créer, d'informations d'au moins un sous-groupe de stockage dans chaque groupe de stockage de fédération, et d'informations d'un support de stockage physique dans chaque sous-groupe de stockage ;

la création (S420) d'au moins un groupe de stockage de fédération selon les informations du au moins un groupe de stockage de fédération ;

la création (S430), selon les informations dudit au moins un sous-groupe de stockage dans chaque groupe de stockage de fédération, d'au moins un sous-groupe de stockage dans un groupe de stockage de fédération correspondant ;

l'ajout (S440), selon les informations du support de stockage physique correspondant à chaque sous-groupe de stockage, d'un support de stockage physique correspondant à un sous-groupe de stockage correspondant ;

**caractérisé par** :

la sélection (S120) du sous-groupe de stockage cible à partir du groupe de stockage de fédération correspondant aux informations du groupe de stockage de fédération dans le au moins un groupe de stockage de fédération comprend :

l'acquisition (S320) d'un état de fonctionnement dudit au moins un sous-groupe de stockage dans le groupe de stockage de fédération ; ledit état de fonctionnement comprenant : un état de fonctionnement normal défini pour être prêt et indiquant qu'un support de stockage physique dans le sous-groupe de stockage est dans un état disponible, un état intermédiaire défini pour être non prêt et indiquant qu'un autre volume de stockage est en cours de création ou le volume de stockage est en cours de suppression, un état de veille défini comme étant en attente et indiquant que le support de stockage physique dans le sous-groupe de stockage est dans une phase déconnectée ou inactive, et un état d'erreur ou d'indisponibilité défini comme étant une erreur et indiquant que le support de stockage physique dans le sous-groupe de stockage est dans un état endommagé, un état déconnecté ou une erreur de lettre de lecteur ;

la détermination (S330) qu'un sous-groupe de stockage dans un état de fonctionnement normal selon l'état de fonctionnement du au moins un sous-groupe de stockage ;

la notation (S340) du sous-groupe de stockage dans l'état de fonctionnement normal selon les informations d'attribut du volume de stockage à créer et les informations d'attribut du sous-groupe de stockage dans l'état de fonctionnement normal ;

la considération (S350) d'un sous-groupe de stockage avec un score satisfaisant une exigence prédéfinie en tant que sous-groupe de stockage cible.

2. Procédé de la revendication 1, lesdites informations d'attribut du volume de stockage à créer comprenant au moins une taille d'espace appliquée pour le volume de stockage à créer et une bande passante de lecture-écriture appliquée pour le volume de stockage à créer, lesdites informations d'attribut du sous-groupe de stockage comprenant au moins une taille d'espace totale, une bande passante de lecture-écriture totale, une taille d'espace utilisée et une bande passante de lecture-écriture utilisée du sous-groupe de stockage, et ladite bande passante de lecture-écriture comprenant un nombre d'opérations de lecture-écriture par seconde, iops, un nombre de bits transmis par seconde, bps, ou une proportion de bande passante du support de stockage physique occupé dans chaque période d'ordonnancement de lecture-écriture.

3. Procédé de la revendication 2, ladite notation (S340) du sous-groupe de stockage dans l'état de fonctionnement normal selon les informations d'attribut du volume de stockage à créer et les informations d'attribut du sous-groupe de stockage comprenant :

la soustraction de la taille d'espace utilisée de la taille d'espace totale du sous-groupe de stockage dans l'état de fonctionnement normal pour obtenir une taille d'espace restant du sous-groupe de stockage dans l'état de fonctionnement normal ;

la soustraction de la bande passante de lecture-écriture utilisée de la bande passante de lecture-écriture totale du sous-groupe de stockage dans l'état de fonctionnement normal pour obtenir une bande passante de lecture-écriture restante du sous-groupe de stockage dans l'état de fonctionnement normal ; et

la réalisation d'une sommation pondérée sur un rapport de la taille d'espace d'application à la taille d'espace restant et un rapport de la bande passante de lecture-écriture d'application à la bande passante de lecture-écriture restante pour obtenir un score du sous-groupe de stockage dans l'état de fonctionnement normal.

4. Procédé de la revendication 1, lesdites informations du au moins un sous-groupe de stockage comprenant : un nom du sous-groupe de stockage, une combinaison du support de stockage physique dans le sous-groupe de stockage, un stockage en arrière-plan, un type de système de fichiers et des informations du support de stockage physique dans le sous-groupe de stockage.

5. Procédé de la revendication 1, après l'ajout (S440), selon les informations du support de stockage physique correspondant à chaque sous-groupe de stockage, du support de stockage physique correspondant au sous-groupe de stockage correspondant, le procédé comprend en outre au moins un parmi :

l'appel d'une interface d'extension de capacité d'une couche de groupe de stockage de fédération où se trouve le au moins un groupe de stockage de fédération, et l'ajout d'un nouveau groupe de stockage de fédération ;

l'appel de l'interface d'extension de capacité de la couche de groupe de stockage de fédération où se trouve le au moins un groupe de stockage de fédération, et l'ajout d'un nouveau sous-groupe de stockage dans le groupe de stockage de fédération ;

l'appel d'une interface d'extension de capacité du sous-groupe de stockage, et l'augmentation d'une taille d'espace du sous-groupe de stockage ; et

l'appel de l'interface d'extension de capacité du volume de stockage, et l'augmentation d'une taille d'espace du volume de stockage.

6. Procédé de la revendication 1, après la création (S130), selon les informations d'attribut du volume de stockage à créer, du volume de stockage dans le sous-groupe de stockage cible par l'intermédiaire du support de stockage physique du sous-groupe de stockage cible, ledit procédé comprenant en outre :

l'acquisition d'un type de système de fichiers et d'un point de montage requis pour le volume de stockage à créer ;

le formatage du volume de stockage dans un système de fichiers correspondant au type de système de fichiers ; et

le montage du volume de stockage au point de montage.

7. Procédé de l'une quelconque des revendications 1 à 6, après la création (S130), selon les informations d'attribut du volume de stockage à créer, du volume de stockage dans le sous-groupe de stockage cible par l'intermédiaire du support de stockage physique du sous-groupe de stockage cible, ledit procédé comprenant en outre :

l'acquisition d'informations du volume de stockage à partir d'informations de demande selon lesquelles l'utilisation du volume de stockage est terminée ;
la détermination, selon les informations du volume de stockage, d'un sous-groupe de stockage auquel appartient le volume de stockage ; et
la suppression du volume de stockage dans le sous-groupe de stockage auquel appartient le volume de stockage.

8. Serveur, comprenant :

au moins un processeur (60) ; et
une mémoire (61) configurée pour stocker au moins un programme,
ledit au moins un programme, lorsqu'il est exécuté par le au moins un processeur (60), amenant le au moins un processeur (60) à mettre en oeuvre le procédé de création de volume de stockage selon l'une quelconque des revendications 1 à 7.

9. Support de stockage lisible par ordinateur, stockant un programme informatique, ledit programme, lorsqu'il est exécuté par un processeur, mettant en oeuvre le procédé de création de volume de stockage selon l'une quelconque des revendications 1 à 7.

**FIG. 1**

| | |
|---|---|
| Acquire attribute information of a storage volume to be created and information of a federation storage pool used for creating the storage volume to be created | S110 |
| Select a target sub-storage pool from a federation storage pool corresponding to the information of the federation storage pool, where the federation storage pool includes at least one sub-storage pool | S120 |
| Create a storage volume in the target sub-storage pool through a physical storage medium of the target sub-storage pool according to the attribute information of the storage volume to be created | S130 |

**FIG. 2a**

**FIG. 2b**

| Acquire attribute information of a storage volume to be created and information of a federation storage pool used for creating the storage volume to be created | S210 |

↓

| Acquire an operation state of at least one sub-storage pool in the federation storage pool | S220 |

↓

| Select a sub-storage pool in a normal operation state as a target sub-storage pool | S230 |

↓

| Create a storage volume in the target sub-storage pool through a physical storage medium of the target sub-storage pool according to the attribute information of the storage volume to be created | S240 |

**FIG. 3**

| Acquire attribute information of a storage volume to be created and information of a federation storage pool used for creating the storage volume to be created | S310 |

↓

| Acquire an operation state of at least one sub-storage pool in the federation storage pool | S320 |

↓

| Determine a sub-storage pool in a normal operation state according to the operation state of the at least one sub-storage pool | S330 |

↓

| Score the sub-storage pool in the normal operation state according to the attribute information of the storage volume to be created and attribute information of the sub-storage pool in the normal operation state | S340 |

↓

| Take a sub-storage pool with a score satisfying a preset requirement as a target sub-storage pool | S350 |

↓

| Create a storage volume in the target sub-storage pool through a physical storage medium of the target sub-storage pool according to the attribute information of the storage volume to be created | S360 |

**FIG. 4**

Acquire information of at least one federation storage pool to be created, information of at least one sub-storage pool in each federation storage pool, and information of a physical storage medium in each sub-storage pool — S410

Create at least one federation storage pool according to the information of the at least one federation storage pool — S420

Create at least one sub-storage pool in a corresponding federation storage pool according to the information of the at least one sub-storage pool in the each federation storage pool — S430

Add a corresponding physical storage medium to a corresponding sub-storage pool according to the information of the physical storage medium corresponding to the each sub-storage pool — S440

Acquire attribute information of a storage volume to be created and information of a federation storage pool used for creating the storage volume to be created — S450

Select a target sub-storage pool from a federation storage pool corresponding to the information of the federation storage pool, where the federation storage pool includes at least one sub-storage pool — S460

Create a storage volume in the target sub-storage pool through a physical storage medium of the target sub-storage pool according to the attribute information of the storage volume to be created — S470

**FIG. 5**

51
Acquisition module

52
Selection module

53
Creation module

**FIG. 6**

Acquisition
module — 61

Acquisition
module — 60

**FIG. 7**

**EP 3 796 150 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017109045 A1

- US 2011225379 A1